# EUROPÄISCHE PATENTSCHRIFT

(11) **EP 0 579 953 B1**
(45) Veröffentlichungstag und Bekanntmachung des Hinweises auf die Patenterteilung: **27.12.1995**
(21) Anmeldenummer: 93109633.3
(22) Anmeldetag: 16.06.1993
(51) Int. Cl.: H02K 3/487

(54) **Verfahren zur Herstellung eines genuteten Ankers**
Method for producing a slotted armature
Procédé pour la fabrication d'un induit rainuré

(30) Priorität: 23.07.1992 DE 9209930 U
(43) Veröffentlichungstag der Anmeldung: 26.01.1994
(73) Patentinhaber: SIEMENS AKTIENGESELLSCHAFT, 80333 München (DE)
(72) Erfinder: Schäfer, Günther, Dipl.-Ing. (FH), D-8711 Kleinlangheim (DE); Schubert, Franz, D-8700 Würzburg-Lengfeld (DE)

(56) Entgegenhaltungen:
- WO-A-92/00626
- DD-A- 220 183
- GB-A- 771 109
- GB-A- 1 595 279

## Beschreibung

Die Erfindung bezieht sich auf ein Verfahren zur Herstellung eines genuteten Ankers gemäß Oberbegriff des Anspruchs 1; ein derartiger genuteter Anker ist durch PCT-Anmeldung WO 92/00 626 bekannt.

Bei dem durch die WO 92/00 626 bekannten Anker werden die in die Nuten des Ankerblechpaketes eingelegten Wicklungen durch längliche, elastische Nutverschlüsse niedergehalten, von denen eine oder mehrere je Ankerblechpaket aus einer Schnurwicklung mit üblicherweise rundem Querschnitt bestehen, die nach dem Einbringen mit Träufelharz verfestigt und am Anker fixiert werden.

Ein demgegenüber die Wicklung auch bei hohen Drehzahlen sicher niedergehaltender sowie betriebsmäßig eine höhere Geräuschminderung des rotierenden Ankers gewährleistender Nutverschluß kann erfindungsgemäß durch die Lehre des Anspruchs 1 erreicht werden; vorteilhafte Ausgestaltungen der Erfindung sind jeweils Gegenstand der Unteransprüche.

Der erfindungsgemäße Nutverschluß erlaubt trotz Verwendung eines äußerst preiswerten Ausgangsmaterials mit einfachen Mitteln durch einen einfachen Prägevorgang eine an die Nutform anpaßbare Profilierung, derart daß der radial oberhalb der Wicklung in die Nut axial eingeschobene Nutverschluß jeweils den freien Nutraum oberhalb der Wicklung voll ausfüllt, somit ein radiales Ausweichen der Wicklung, insbesondere bei hohen Drehzahlen und damit verbundener Fliehkraftbelastung, mit Sicherheit verhindert und gleichzeitig Wirbelzonen zwischen dem Nutverschluß und beabstandeten, wicklungslosen Nutwandungen vermeidet, die Anlaß für unerwünschte Geräuschbildungen sein können.

Die Erfindung wird im folgenden anhand schematisch dargestellter Ausführungsbeispiele in der Zeichnung näher erläutert; darin zeigen:
- FIG 1: in einem Ausschnitt aus einem Ankerblechpaket eine einzelne Nut mit darin durch einen profilierten Papierkordel-Nutverschluß festgelegter Ankerwicklung.
- FIG 2: einen aus einem Papierkordel-Wickel durch eine Prägevorrichtung abgezogenen und profilvorgeformten sowie längengenau abgetrennten Nutverschluß.
- FIG 3: in einem Ausschnitt aus einem Ankerblechpaket eine einzelne Nut mit oberhalb der Wicklung angeordnetem nicht profilvorgeformten Papierkordel-Nutverschluß.

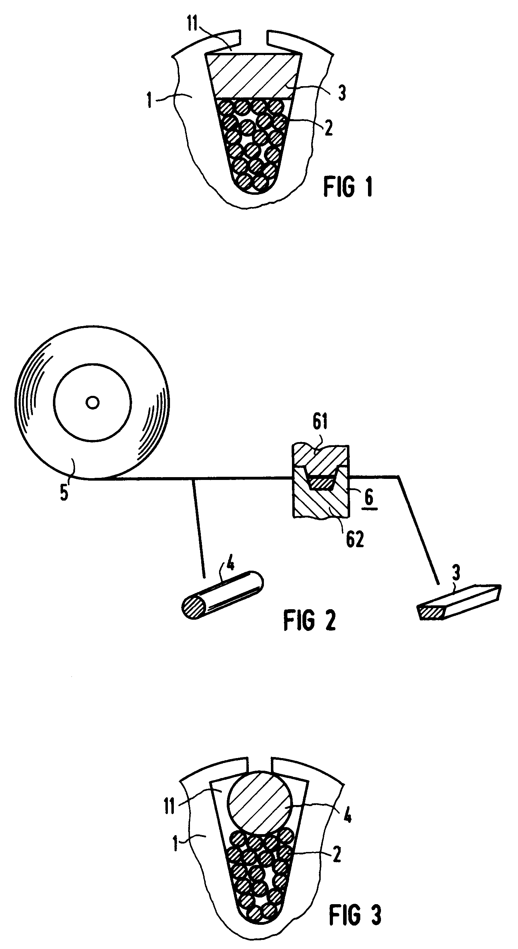

FIG 1,3 zeigen jeweils in einem Ausschnitt aus einem Ankerblechpaket 1 und eine Nut 11, in die nutgrundseitig eine Ankerwicklung 2 eingeträufelt ist. In den freien Nutraum radial oberhalb der eingeträufelten Ankerwicklung 2 ist gemäß FIG 3 ein Nutverschluß 4 aus einer nicht vorgeformten Rund-Papierkordel eingebracht; dabei verbleiben zwischen dem Außenumfang des Nutverschlusses einerseits und der teilweise beabstandeten Innenwandung der Nut Freiräume, in die die Ankerwicklung, insbesondere bei hohen Drehzahlen, ausweichen kann und die Anlaß für geräuschbildende Luftverwirbelungen sein können.

FIG 1 zeigt im Gegensatz dazu einen Nutverschluß 3 aus einer profilvorgeformten Papierkordel, wobei in Anpassung an die Profilform der Nut 11 der Nutverschluß 3 derart trapezförmig ausgebildet ist, daß kein Freiraum zwischen der eingeträufelten Ankerwicklung 2 und dem übrigen Nutraum verbleibt und somit nicht die Gefahr besteht, daß einerseits einzelene Wicklungsteile - wie in FIG 3 angedeutet - bei hohen Drehzahlen des Ankers und damit entsprechend wirksam werdenden Fliehkräften nach radial außen ausweichen und andererseits Luftverwirbelungen entstehen können. Sofern die Nutverschlüsse nur für Motoren in trockenen Räumen vorgesehen sind, kann auf eine Tränkung der Nutverschlüsse verzichtet und in umweltschützender Weise auf eine Backlack-Ankerwicklung anstelle einer gießharzgetränkten Ankerwicklung zurückgegriffen werden.

Bei Einsatz von mit den erfindungsgemäßen Nutverschlüssen ausgestatteten Motoren in Feuchträumen ist in vorteilhafter Weise vorgesehen, die Nutverschlüsse 3 nach dem Einschieben in die Nuten 11 radial feuchtigkeitsresistent zu tränken.

Der profilvorgeformte Nutverschluß 3 entsteht gemäß FIG 2 in vorteilhafter Weise durch Abziehen einer Papierkordel in Rundform gemäß dem Nutverscchluß 4 aus einem Wickel 5 mittels einer Prägerollenvorrichtung 6 beim Durchlaufen zwischen deren erster Prägerolle 61 und deren zweiter Prägerolle 62, der gleichzeitigen Profilierung der Rundkordel zu einem Trapez-Profil gemäß dem Nutverschluß 3 sowie einem Abtrennen entsprechend der Axiallänge der Nuten 11.

## Patentansprüche

1. Verfahren zur Herstellung eines genuteten Ankers, insbesondere für einen Universalmotor, mit durch Nutverschlüsse (3) aus Papierkordel in den Nuten (11) des Ankerblechpaketes (1) festlegbarer Ankerwicklung (2), **gekennzeichnet durch** ein axiales Einschieben von aus Rund-Papierkordel tränkungsfrei entsprechend der aufnehmenden Nutform profilvorgeformten, massiven Nutverschlüssen (3) in die Nuten (11) radial oberhalb der zuvor eingebrachten Ankerwicklung (2).

2. Verfahren nach Anspruch 1, **gekennzeichnet durch** trapezförmig vorgeformte Nutverschlüsse (3).

3. Verfahren nach Anspruch 1 oder 2, **gekennzeichnet durch** aus einem Papierkordel-Wickel (5) durch eine Prägerollenvorrichtung (6) abgezogene und profilvorgeformte sowie entsprechend der axialen Länge der Nuten (11) abgetrennte Nutverschlüsse (3).

4. Verfahren nach zumindest einem der Ansprüche 1-3, **gekennzeichnet durch** eine Backlack-Ankerwicklung als von den Nutverschlüssen (3) gegen ein radiales Ausweichen aus den Nuten (11) fixierte Ankerwicklung (2).

## Claims

1. Method for the production of a slotted armature, in particular for a universal motor, having an armature winding (2) which can be fixed in the slots (11) of the laminated armature core (1) by slot closures (3) of paper thread, characterized by an axial insertion of solid slot closures (3), which are preshaped in terms of profile corresponding to the receiving slot shape from round paper threads without impregnation, into the slots (11) radially above the previously introduced armature winding (2).

2. Method according to Claim 1, characterized by trapezoidal preshaped slot closures (3).

3. Method according to Claim 1 or 2, characterized by slot closures (3) which are drawn off a paper-thread winding (5) through an embossing-roller device (6) and preshaped in terms of profile and severed according to the axial length of the slots (11).

4. Method according to at least one of Claims 1-3, characterized by a stove-enamel armature winding as an armature winding (2) which is fixed against radial escape from the slots (11) by the slot closures (3).

## Revendications

1. Procédé de fabrication d'un induit à encoches, notamment pour un moteur universel, comportant un enroulement d'induit (2), qui peut être fixé par des fermetures d'encoche (3), en ficelle de papier dans les encoches (11) du paquet de tôles d'induit (1), caractérisé par une insertion axiale des fermetures d'encoche (3) pleines en ficelle de papier ronde non imprégnées, préprofilées à la forme des encoches de réception, dans les encoches (11) radialement, au-dessus de l'enroulement d'induit préalablement inséré (2).

2. Procédé suivant la revendication 1, caractérisé par des fermetures d'encoche (3) préformées de configuration trapézoïdale.

3. Procédé suivant la revendication 1 ou 2, caractérisé par des fermetures d'encoche (3) tirées d'un rouleau de ficelle de papier (5) par un dispositif à rouleaux de gaufrage (6) et profilées et ainsi que tronçonnées à la longueur axiale des encoches (11).

4. Procédé suivant au moins l'une des revendications 1 à 3 caractérisé par un enroulement d'induit backlack, en tant qu'enroulement d'induit (2) empêché par les fermetures d'encoche (3) de sortir radialement des encoches (11).
